# EUROPÄISCHE PATENTANMELDUNG

(11) **EP 1 262 734 A1**
(43) Veröffentlichungstag der Anmeldung: **04.12.2002**
(21) Anmeldenummer: 01113378.2
(22) Anmeldetag: 01.06.2001
(51) Int. Cl.: G01B 9/02

(54) **Vorrichtung zur berührungslosen Vermessung eines Messojektes, insbesondere zur Distanz- und/oder Schwingungsmessung**

(71) Anmelder: Dalhoff, Ernst Dr., 72108 Rottenburg (DE); Zenner, Hans Peter, Prof. Dr. med., 72070 Tübingen (DE)
(72) Erfinder: Dalhoff,Ernst Dr., 72108 Rottenburg (DE)
(74) Vertreter: Patentanwälte Ruff, Wilhelm, Beier, Dauster & Partner

(57) **Zusammenfassung**

Eine Vorrichtung zur berührungslosen Vermessung eines Meßobjekts, insbesondere zur Distanz- und/oder Schwingungsmessung hat mindestens eine Laserlichtquelle, optische Einrichtungen zur Teilung des Lichts in zur Wechselwirkung mit dem Meßobjekt vorgesehenen Objektlicht (4) und Referenzlicht (5) und zur Überlagerung von Objektlicht und Referenzlicht nach Wechselwirkung des Objektlichts mit dem Meßobjekt, vorzugsweise eine Frequenzverschiebungseinrichtung in Form einer Bragg-Zelle zur Erzeugung einer Frequenzverschiebung zwischen Objektlicht und Referenzlicht und eine Detektionseinrichtung (15) zur Umwandlung von Referenzlicht und Objektlicht in zur Weiterverarbeitung geeignete elektrische Signale. Die Detektionseinrichtung hat mindestens zwei in Reihe geschaltete optoelektronische Wandler in Form von Fotodioden (30, 31). Zwischen den Wandlern befindet sich ein Abgriff (32) zum Abgreifen eines Differenzsignals, das zur Weiterverarbeitung einer den Wandlern zugeordneten Transimpedanzschaltung (33) zugeführt wird. Dadurch findet in einer ausgeglichenen Detektionsanordnung eine Subtraktion von Fotodiodenströmen vor Weiterverarbeitung in einer Verstärkungsschaltung statt. Diese ermöglicht auf kostengünstige Weise Messungen bei hoher Referenzlichtleistung mit Auflösungen im Bereich des Quantenrauschlimits (hierzu Figur 3).

## Beschreibung

Die Erfindung betrifft eine Vorrichtung zur berührungslosen Vermessung eines Meßobjekts, insbesondere zur Distanz- und/oder Schwingungsmessung, gemäß dem Oberbegriff von Anspruch 1.

Laserinterferometer der gattungsgemäßen Art sind zur hochauflösenden Weg- bzw. Distanzmessung und Schwingungsmessung besonders geeignet. Die Messungen können ohne mechanische Beeinflussung des Meßobjektes berührungslos auf optischem Wege durchgeführt werden. Dabei wird kohärentes Licht, das bevorzugt von einer Laserlichtquelle erzeugt wird, in zur Wechselwirkung mit dem Meßobjekt vorgesehenes Objektlicht und Referenzlicht aufgeteilt. Das Objektlicht wird gesondert vom Referenzlicht in einem Meßarm zum Meßobjekt geführt, wechselwirkt mit diesem beispielsweise durch Reflexion und wird dann mit dem in einem Referenzarm geführten Referenzlicht überlagert. Hierbei ergeben sich Interferenzmuster, die außerordentlich empfindlich von der Länge des Meßarms und von deren zeitlicher Änderung abhängen.

Bei der Vermessung von schwingenden Meßobjekten haben sich sogenannte Heterodyn-Interferometer durchgesetzt, die unter anderem eine vorzeichenrichtige Charakterisierung der Schwingungen erlauben. Sie zeichnen sich durch mindestens eine Frequenzverschiebungseinrichtung zur Erzeugung einer Frequenzverschiebung zwischen Objektlicht bzw. Objektstrahl und Referenzlicht bzw. Referenzstrahl aus. Diese Frequenzverschiebung lässt sich insbesondere durch Verwendung eines optoakustischen Modulators, insbesondere einer Bragg-Zelle erzeugen.

Mit Heterodyn-Interferometem kann sowohl an Meßobjekten mit optisch glatten Oberflächen (z. B. Spiegeln, Retroreflektoren oder dergleichen), als auch an Meßobjekten mit optisch rauhen Oberflächen gemessen werden. Befindet sich die Reflektivität des Meßobjektes innerhalb des unteren Bereichs, in dem das Interferometer überhaupt messen kann, so ist die Genauigkeit bzw. Auflösung der Messung innerhalb einer gegebenen Meßintegrationszeit von der zurückreflektierten Objektlichtleistung abhängig.

Es ist bekannt, daß bei optimaler Auslegung eines Interferometers die. unterste, mit konventionellen Mitteln erreichbare Auflösungsgrenze durch das sogenannte Schrotrauschen der Photonen bestimmt wird. Diese Grenze wird im folgenden auch als Quantenrauschen der Photonen oder als Quantenrauschlimit (QRL) bezeichnet.

Wissenschaftliche Experimente z. B. im Bereich der optischen Nachrichtenübertragung oder der astronomischen Interferometrie haben angedeutet, daß sich Messungen nahe am Quantenrauschlimit realisieren lassen, wenn detektionsseitig zur Umwandlung von Referenzlicht und Objektlicht in elektrische Signale eine sog. ausgeglichene Detektionseinrichtung verwendet wird (G.L. Abbas, V.W.S. Chan und T.K. Yee "Local-oscillator excess-noise supression for homodyne and heterodyne detection", Optics Letters, Volume 8, No. 8 (1983) 419 bis 421 oder H. van de Stad "Heterodyne Detection at a Wavelengh of 3.39 µm for Astronomical Purposes", Astron. & Astrophys. 36 (1974) 341 bis 348). Die in der erstgenannten Veröffentlichung vorgeschlagene Detektionseinrichtung für die "Balanced Detection" hat zwei identisch aufgebaute Detektoren mit jeweils einer Fotozelle und einer geeigneten Schaltung zur Umwandlung des durch Lichteinfall verursachten Fotozellenstromes in eine Detektorausgangsspannung. Zur Bildung eines auswertbaren Differenzsignals werden die Detektorausgangsspannungen voneinander abgezogen, wodurch auf Gleichlichtanteilen in beiden Detektoren beruhende Signalanteile aus dem verstärkten Subtraktionssignal eliminiert werden können.

Dem Wunsch nach Messung möglichst nahe am Quantenrauschlimit steht bei Heterodyninterferometern die Forderung nach einer Messung mit möglichst hoher Heterodynfrequenz gegenüber. Hohe Heterodynfrequenzen sind aus mehreren Gründen wünschenswert. Zum einen kann das Störungsrauschen breitbandiger unterdrückt werden, je höher die Heterodynfrequenz ist. Zweitens kann die zulässige Geschwindigkeit des Meßobjektes bzw. die Bandbreite der zu vermessenden Schwingungen um so höher sein, je höher die Heterodynfrequenz gewählt wird. Schließlich können die meisten verwendeten akustooptischen Modulatoren bezüglich Baugröße und elektrischem Leistungsverbrauch um so kleiner ausgelegt werden, je höher die Heterodynfrequenz gewählt wird. Allerdings kann die Heterodynfrequenz nicht beliebig hoch gewählt werden, da detektionsseitig das thermische Rauschen von Lastwiderständen, an denen Meßströme optoelektronischer Wandler abfallen, um so größer wird, je höher die Heterodynfrequenz gewählt wird. Als Folge hiervon sollte bei höheren Heterodyfrequenzen zur Erzielung von Auflösungen im Bereich des Quantenrauschlimits die Referenzlichtleistung besonders hoch gewählt werden, damit das Photonenrauschen das genannte thermische Rauschen übersteigt und detektierbar wird.

Unter Berücksichtigung dieser Umstände ist eine Messung mit Auflösung im Bereich des Quantenrauschlimits prinzipiell möglich. Die in der Forschung verwendeten Aufbauten sind jedoch zu kompliziert und teuer oder in ihren Anforderungen an die Umgebung zu anspruchsvoll, so daß heute kommerziell erhältliche Interferometer das Quantenrauschlimit nicht erreichen.

Gattungsgemäße Interferenzeinrichtungen können mit besonderem Vorteil im Bereich der Medizin zur Ermittlung von Daten über das Hörvermögen z. B. über direkte Schwingungsmessungen am Trommelfell eingesetzt werden. Beispiele für derartige Messungen mittels Laser-Doppler-Vibrometrie sind z. B. in der internationalen Patentanmeldung WO 97/04706 oder in einer Veröffentlichung von N. Stasche, H.-J. Foth und K. Hörmann in HNO (1993), 41, Seiten 1 bis 6 beschrieben. Der Wunsch nach Messung möglichst nahe am Quantenrauschlimit ergibt sich hier zum einen durch eine naturgemäß geringe Reflektivität des Meßobjekts (Trommelfell) und zum anderen aus dem Wunsch, auch extrem kleine Schwingungsamplituden bis hinunter in den Pikometerbereich zu messen, wie sie nahe der Hörschwelle im mittleren Frequenzbereich auftreten. Die Problematik wird dadurch verschärft, daß für praktische Anwendungen, beispielsweise bei ambulanter Behandlung von Patienten im klinischen Alltag oder beim HNO-Arzt relativ kurze Meßzeiten von typischerweise weniger als einer Minute angestrebt werden sollten.

Der Erfindung liegt die Aufgabe zu Grunde, eine gattungsgemäße Vorrichtung zu schaffen, die kostengünstig herstellbar ist und die Distanzund/oder Schwingungsmessungen mit hoher Auflösung im Bereich des Quantenrauschlimits ermöglicht. Insbesondere soll ein hochempfindliches, kostengünstig herstellbares Laser-Doppler-Vibrometer ermöglicht werden, das insbesondere zur ambulanten Ermittlung von Daten über das Hörvermögen einsetzbar ist.

Diese Aufgabe wird gelöst durch eine Vorrichtung mit den Merkmalen von Anspruch 1. Bevorzugte Ausführungsformen sind in den abhängigen Ansprüchen angegeben. Der Wortlaut sämtlicher Ansprüche wird durch Bezugnahme zum Inhalt der Beschreibung gemacht.

Eine erfindungsgemäße Vorrichtung zeichnet sich dadurch aus, daß die Detektionseinrichtung mindestens zwei in Reihe geschaltete optoelektronische Wandler aufweist und daß zwischen den Wandlern ein Abgriffspunkt zum Abgreifen eines zur Weiterverarbeitung vorgesehenen Signals, insbesondere eines Differenzsignals, vorgesehen ist. Bei der bevorzugten Verwendung von Fotodioden als optoelektronische Wandler kann dadurch erreicht werden, daß eine Subtraktion der Fotodiodenströme vor Abfall von Fotodiodenstrom an einem Lastwiderstand einer an die Fotodioden angeschlossenen gemeinsamen Verstärkungsschaltung erfolgt. Im Fall von Fotodioden als Wandler entsteht am Abgriff ein Differenzstromsignal. Das an den Wandlem entstehende Stromsignal kann daher ohne hohen Gleichstromanteil weiterverarbeitet werden, so daß die Weiterverarbeitung sich von Beginn an auf diejenigen informationstragenden Signalanteile konzentrieren kann, die auf Unterschieden zwischen den Diodenströmen der beiden Wandler beruhen und aus denen ein Nutzsignal ableitbar ist. Es werden im wesentlichen keine Gleichtaktströme über einen angekoppelten Widerstand fließen, so daß die volle Dynamik einer Verstärkungsschaltung zur Verstärkung des Nutzsignals zur Verfügung steht. Diese Schaltung die als besonders vorteilhafte Art einer "balanced detection" angesehen werden kann, ermöglicht insbesondere auch die zur Erreichung von Auflösungen im Bereich des Quantenrauschlimits vorteilhafte Verwendung von leistungsstarken Referenzlichtfeldern, die bei herkömmlichen Detektionsschaltungen zu einem hohen Dauerstrom der Fotodioden führen können.

Es ist auch möglich, andere optoelektronische Wandler zu verwenden, beispielsweise Fotowiderstände oder Fototransistoren. Die Wandler der Reihenschaltung sind vorzugsweise bezüglich ihrer elektrischen Eigenschaften identisch zu wählen.

Das zwischen den optoelektronischen Wandlern der Reihenschaltung abgreifbare Signal, das insbesondere eine Differenz zwischen den Fotoströmen zweiter Fotodioden der Reihenschaltung repräsentiert, wird bei einer bevorzugten Ausführungsform einer beiden Wandlern gemeinsamen Verstärkungsschaltungsanordnung zugeführt, die vorzugsweise als Transimpedanzschaltung ausgebildet ist. Bei der erfindungsgemäßen Detektionseinrichtung kann also zur Weiterverarbeitung des Differenzsignals eine einzige, hierzu geeignete Schaltungsanordnung verwendet werden. Dies bedeutet gegenüber Lösungen mit zwei Detektoren, von denen jeder einen Wandler und eine zugeordnete Verstärkungsschaltung aufweist, einerseits eine Reduzierung der erforderlichen Bauteile und damit eine Möglichkeit zur Kostenreduzierung und andererseits eine Verbesserung der Genauigkeit der Signalauswertung, da sich durch Bauteiltoleranzen ergebende mögliche Unterschiede zwischen mehreren Verstärkerschaltungen bei Verwendung einer einzigen Verstärkerschaltung vermeiden lassen. Insbesondere kann es so sein, daß der Abgriff direkt mit einem Eingang eine Operationsverstärkers oder eines gleichwirkenden Elements signalleitend verbunden ist.

Bei einer Weiterbildung ist bei der Detektektoreinrichtung eine Vorspannungseinrichtung zur Erzeugung einer im wesentlichen konstanten elektrischen Vorspannung an der Reihenschaltung in Sperrichtung der Wandler vorgesehen. Dadurch kann deren Kapazität herabgesetzt werden, was eine rauscharme Signalerzeugung auch bei Interferometern ermöglicht, bei denen Meßinformationen in einem hochfrequenten Band übertragen werden, beispielsweise bei Heterodyn-Interferometern, die z. B. mit Trägerfrequenzen in Bereich von 80 MHz arbeiten.

Bei einer Weiterbildung zeichnet sich die Detektionseinrichtung durch einen besonders hohen Wirkungsgrad der Umwandlung zwischen einfallendem Licht und dem Ausgangssignal des optoelektronischen Wandlers aus. Dies wird dadurch erreicht, daß mindestens einer der Wandler, vorzugsweise beide Wandler, eine Lichtauftrefffläche aufweisen, die bezogen auf die Einfallsrichtung des einfallenden Lichts im wesentlichen im Brewsterschen Winkel ausgerichtet ist. Dieser von den Brechungsindizes der an der Auftrefffläche aneinandergrenzenden Medien abhängige Winkel ist bekanntlich dadurch gekennzeichnet, daß bei Reflexion unter dem Brewsterschen Winkel das reflektierte Licht vollständig linear polarisiert ist und der reflektierte und der gebrochene, d. h. in das optisch dichtere Medium eindringende Strahl senkrecht aufeinanderstehen. Dies sorgt dafür, daß möglichst viel einfallendes Licht in Fotodiodenstrom umgewandelt wird.

Die beschriebene Detektionseinrichtung mit einer Reihenschaltung optoelektronischer Wandler und einem Signalabgriff zwischen den Wandern sowie deren Weiterbildungen stellen eine hochempfindlich, rauscharme Detektionseinrichtung dar, die besonders vorteilhaft bei der beschriebenen Heterodyn-Laserinterferometrie eingesetzt werden kann. Erfindungsgemäße Detektionseinrichtungen sind jedoch auch bei Einrichtungen, ohne Frequenzverschiebungseinrichtungen zwischen Objekt- und Referenzstrahl oder bei Einrichtungen mit entsprechend angeordneten Phasenverschiebungseinrichtungen mit Vorteil einsetzbar.

Die bisher beschriebenen Maßnahmen tragen detektionsseitig zu einer Verbesserung der Auflösung von Interferometrieeinrichtungen bis in den Bereich des Quantenrauschlimits bei. Es sind jedoch auch im Bereich der Lichterzeugung auflösungsverbessernd wirkende Maßnahmen möglich. Wie bereits erwähnt, ist es bei Heterodyn-Interferometem zur Ermöglichung von Messungen am Quantenrauschlimit erforderlich, daß der Pegel des detektionsseitigen Signals höher liegt als der Pegel des thermischen Rauschens von Komponenten der Detektionseinrichtungen, insbesondere von deren Lastwiderständen. Dies kann durch eine entprechend hohe Referenzlichtleistung erreicht werden. Die heutzutage insbesondere bei stationären Anlagen und Forschungsaufbauten häufig verwendeten Gaslaser werden jedoch mit zunehmender Leistung teurer und auch größer. Bei einer vorteilhaften Weiterbildung ist als Lichtquelle eine Laserdiode vorgesehen. Laserdioden können nicht nur die gewünschten hohen Lichtleistungen beispielsweise in der Größenordnung von bis zu 1 mW bieten, sondern sie sind auch kostengünstig erhältlich und zeichnen sich durch kompakte Bauformen aus. Ein besonderer Vorteil insbesondere für Verwendungen erfindungsgemäßer Schwingungsmeßsysteme im medizinischen Bereich, und dort insbesondere im Zusammenhang mit Operationen, ergibt sich dadurch, daß Laserdioden im Vergleich zu Gaslasem nur sehr kurze Aufwärmzeiten bis zur Erreichung der vollen Leistung und damit der vollen Meßauflösung bieten.

Bekanntlich ist die Emmissionsfrequenz von Laserdioden stark temperaturabhängig, was die Meßgenauigkeit beeinträchtigen kann. Als eine Ursache ist hier insbesondere das sog. mode-hopping zu nennen. Zur Reduzierung temperaturschwankungsbedingter Farbdrift der Lichtquelle ist bei einer bevorzugten Weiterbildung eine mehrstufige Temperaturstabilisierungseinrichtung zur Stabilisierung der Temperatur der Lichtquelle vorgesehen. Die Temperaturstabilisierungseinrichtung hat eine mit der Lichtquelle wärmeleitend verbundene, temperaturgeregelte erste Stabilisierungseinheit, die wärmeleitend mit mindestens einer temperaturgeregelten zweiten Stabilisierungseinheit verbunden ist. Dadurch kann erreicht werden, daß die zweite Stabilisierungseinheit aufgrund ihrer Temperaturregelung eine relativ temperaturstabile Umgebung für die erste Stabilisierungseinheit und die Lichtquelle schafft. Bezogen auf diese Umgebung, die nur relativ geringe Temperaturschwankungen aufweist, hat die erste Stabilisierungseinheit dann die Aufgabe, die Temperatur der Lichtquelle weiter und feiner zu stabilisieren. Die mehrstufige Temperaturstabilisierung, die gegebenenfalls auch mehr als zwei Stufen aufweisen kann, stellt eine kostengünstige konstruktive Möglichkeit dar, ohne hohen Temperaturreglungsaufwand extrem stabile Temperaturen der Lichtquelle sicherzustellen, was wiederum zu hoher Frequenzstabilität des ausgesandten kohärenten Lichtes führt. Erreichbare Temperaturschwankungen können im Bereich deutlich unterhalb 1 mK liegen und beispielsweise zwischen ca. 1 µK und ca. 10 bis 20 µK liegen.

Das erläuterte Konzept der mehrstufigen Temperaturstabilisierung der Lichtquelle kann unabhängig von sonstigen Merkmalen der Erfindung bei allen Anwendungen genutzt werden, bei denen es besonders auf eine hohe Frequenzstabilität des kohärenten Lichts ankommt. Insbesondere eignet sich das Konzept sowohl für abgeglichene Interferometer, also solche mit gleicher Länge von Objektarm bzw. Meßarm und Referenzarm, als auch für solche (unabgeglichenen) Interferometer, bei denen es wegen eines große Meßbereichs auf eine hohe Frequenzstabilität des Lasers ankommt. Es können statt Laserdioden auch Gaslaser oder andere Laser auf diese Weise temperaturstabilisiert werden.

Zu der für die Temperaturregelung der Stabilisierungseinheiten erforderlichen Temperaturerfassung sowie zur Temperaturänderung können alle hierzu geeigneten Einrichtungen genutzt werden. Besonders vorteilhaft ist es, wenn die erste Stabilisierungseinheit und/oder die zweite Stabilisierungseinheit zur Veränderung der Temperatur der Stabilisierungseinheit mindestens ein Peltierelement aufweist, da hierdurch sowohl Temperaturerhöhungen, als auch Temperaturabsenkungen möglich sind. Zur Temperaturerfassung kann beispielsweise der Widerstand eines Thermistors gemessen werden und einer das Petierelement oder eine andere Wärmeeinrichtung ansteuernden Regelung zugeführt werden.

Zur weiteren Verbesserung der Meßgenauigkeit ist vorzugsweise vorgesehen, daß mindestens ein optisches Element zur Aufteilung und/oder Führung des Lichtes der Lichtquelle gemeinsam mit der Lichtquelle an einer temperaturgeregelten Stabilisierungseinheit angebracht ist. Dabei kann es sich insbesondere um eine Kollimationsoptik und/oder um einen optischen Isolator handeln, also eine Einrichtung, die verhindert, daß Licht in die Lichtquelle zurückgekoppelt wird. Durch die gemeinsame Temperaturstabilisierung bleibt die relative geometrische Anordnung dieser Komponenten zueinander gegen Temperatureinflüsse weitgehend unempfindlich. Alternativ oder zusätzlich ist es auch möglich, daß mindestens eine ggf. vorhandene Frequenzverschiebungseinrichtung, insbesondere eine Bragg-Zelle, temperaturstabilisiert ist, wozu sie beispielsweise an einer der Stabilisierungseinheiten, insbesondere der zweiten Stabilisierungseinheit, angebracht sein kann. Damit können Temperatureinflüsse auf die Frequenzverschiebung weitgehend eliminiert werden.

Erfindungsgemäße Vorrichtungen sind bevorzugt als Heterodyn-Interferometer ausgebildet. Die für den Betrieb eines Heterodyn-Interferometers erforderliche Frequenzverschiebung zwischen Objektlicht und Referenzlicht lässt sich z. B. durch das Durchstimmen einer Laserdiode in Verbindung mit einer Laufzeitdifferenz zwischen Meß- und Differenzlicht, also in einer unabgeglichenen Anordnung erreichen. Bevorzugt wird als Frequenzverschiebungseinrichtung ein akustooptischer Modulator eingesetzt, insbesondere eine Bragg-Zelle, die ohne bewegliche Komponenten arbeitet. Eine im Zusammenhang mit dem Ausführungsbeispiel näher beschriebene Ausführungsform hat eine einzige Frequenzverschiebungseinrichtung, wodurch dieser Aufbau besonders kostengünstig wird. Auch eine Phasenmodulation des Objektlichtes ist möglich.

Die beschriebenen Merkmale und weitere Merkmale der Erfindung ergeben sich aus der nachfolgenden Beschreibung einer bevorzugten Ausführungsform in Verbindung mit den Ansprüchen und den Zeichnungen. Hierbei können die einzelnen Merkmale jeweils für sich oder zu mehreren in Kombination miteinander verwirklicht sein.

In den Zeichnungen zeigen:
Figur 1 eine schematische Darstellung des Aufbaus einer Ausführungsform eines erfindungsgemäßen Laserinterferometers,
Figur 2 eine schematische Darstellung von Teilen einer erfindungsgemäßen Vorrichtung zur Erläuterung der zweistufigen Temperaturstabilisierung einer Laserdiode und
Figur 3 ein Prinzipschaltbild einer Ausführungsform einer erfindungsgemäßen Detektionseinrichtung.

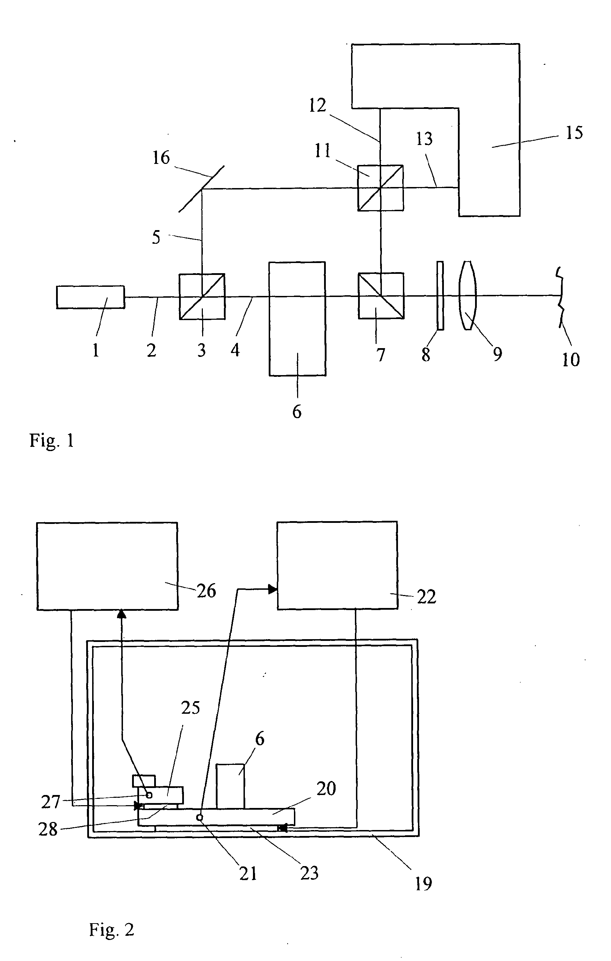

Die in Figur 1 schematisch gezeigte Ausführungsform einer erfindungsgemäßen Vorrichtung zur berührungslosen Vermessung eines Meßobjekts ist als Heterodyn-Laserinterferometer ausgebildet und erlaubt insbesondere hochempfindlich Messungen von Trommelfell- und Gehörknöchelchenschwingungen mittels Laser-Doppler-Vibrometrie. Eine Laserlichtquelle 1 umfasst eine Laserdiode, die kohärentes Licht im nahen Infrarot mit einer Ausgangsleistung von über 10 mW aussendet. Der Laserstrahl 2 wird durch eine nicht gezeigte Kollimationsoptik kollimiert und kann durch einen ggf. vorgesehenen Isolator geführt werden, der verhindert, daß Licht in den Laser 1 zurückgekoppelt wird. Der kollimierte Laserstrahl trifft auf einen polarisierenden Strahlteiler 3, der das auftreffende Licht in durchgehendes Objektlicht 4 und abgelenktes Referenzlicht 5 aufteilt. Das Objektlicht bzw. der Objektstrahl 4 durchläuft im sog. Meßarm der Einrichtung eine Frequenzverschiebungseinrichtung 6, bei der es sich bevorzugt um einen hochfrequenten akustooptischen Modulator in Form einer Bragg-Zelle handelt. Dieser wird zur Modulation des Laserlichtes mit einer Heterodynfrequenz von beispielsweise 80 MHz angesteuert, die sich der Frequenz des kohärenten Lichtes überlagert. Das frequenzmodulierte Objektlicht trifft dann auf einen weiteren polarisierenden Strahlteiler 7 und nach Passieren des Strahlteilers auf eine Viertelwellenlängenplatte 8, die eine Phasenverschiebung des Objektlichtes um ein Viertel der Wellenlänge des auftreffenden Lichtes bewirkt. Das aus der Viertelwellenlängenplatte 8 austretende Objektlicht wird von einer schematisch durch eine Linse repräsentierten, geeigneten Optik 9 auf einen quasi punktförmigen Meßbereich an der Oberfläche eines Meßobjektes 10 fokussiert. Das Meßobjekt kann z. B. das Trommelfell eines Patienten sein.

Ein Anteil des zurückreflektierten Lichts wird durch die Optik 9 und die Viertelwellenlängenplatte 8 zum Strahlteiler 7 geführt, an dem es bei geeigneter Justage des Strahlteilers im wesentlichen vollständig in Richtung eines weiteren Strahlteilers 11 abgelenkt, der zur Erzielung einer möglichst hohen detektorseitigen Lichtintensität zweckmäßig nicht absorbierend ausgebildet ist. Der Strahlteiler 11 teilt das auftreffende Objektlicht in einen in Verlängerung der Einfallsrichtung ausgerichteten Anteil 12 und in einem im insbesondere rechten Winkel zur Einfallsrichtung verlaufenden Anteil 13 auf. Diese Anteile treffen an räumlich voneinander getrennten Stellen auf eine Detektoreinrichtung 15 (vgl. Figur 2).

Das am Strahlteiler 3 vom eintreffenden Laserlicht z. B. im rechten Winkel abgezweigt Referenzlicht 5 wird im sog. Referenzarm mittels eines Spiegels 16 in Richtung auf den detektornahen Strahteiler 11 umgelenkt und trifft in einer Einfallsrichtung auf diesen auf, die idealerweise koaxial zur Richtung des Anteils 13 verläuft. Das einfallende Referenzlicht wird im Strahlteiler 11 in einen mit dem Anteil 13 zusammenfallenden Anteil und in einen mit dem Anteil 12 des Objektlichts zusammenfallenden Anteil aufgeteilt, so daß aus beiden Strahlteilerausgängen eine Überlagerung aus Objektlicht und Referenzlicht austritt und an voneinander beabstandeten Stellen auf die Detektoreinrichtung 15 trifft.

Anstelle dieser bekannten Anordnung, bei der das auf das Meßobjekt einfallende Objektlicht hinter dem Strahlteiler 7 auf dem Hinweg zum Meßobjekt 10 den gleichen Weg durchläuft wie auf dem Rückweg, können Sende- und Empfangsstahlengang des Objektlichtes auch räumlich getrennt werden. Ebenso kann eine Einkoppelung des Objektlichtstrahlengangs in ein Mikroskop oder andere optische Geräte vorgesehen sein, beispielsweise in der Art, die es in der genannten WO 97/04706 beschrieben ist. Insoweit wird der Inhalt dieser Veröffentlichung zum Bestandteil dieser Beschreibung gemacht. Ebenso kann beispielsweise in einer reinen Mach-Zehnder-Anordnung eine Änderung der optischen Weglänge des Objektlichtes im einfachen Durchgang durch ein Meßobjekt registriert werden. Die Erfindung kann also auch für Messungen in Transmission genutzt werden.

Im folgenden werden bei der Ausführungsform verwirklichte besondere Maßnahmen beschrieben, die eine Erhöhung der Meßgenauigkeit und der Auflösung derartiger Anordnungen fördern und die es insbesondere erlauben, auf kostengünstige Weise derartige Anordnungen so aufzuwerten, daß Messungen mit Auflösungen im Bereich des Quantenrauschlimits möglich werden.

Vorteilhafte Maßnahmen auf Seiten der Lichterzeugung und Lichtführung werden im Zusammenhang mit Figur 2 erläutert. Wie schon erwähnt, kann das Quantenrauschlimit insbesondere dadurch erreicht werden, daß mit vergleichsweise hoher Referenzlichtintensität gearbeitet wird. Dies ist kostengünstig durch Verwendung einer Laserdiode als Lichtquelle möglich. Da die Emmissionsfrequenz von Laserdioden stark temperaturabhängig ist und eine hohe Frequenzstabilität angestrebt wird, wird bei der bevorzugten Ausführungsform die Temperatur der Laserdiode 1 hochgenau stabilisiert. Dies wird bei der gezeigten Ausführungsform dadurch erreicht, daß sich wesentliche Teile des Interferometers innerhalb eines Gehäuses 19 auf einem Hauptchassis bzw. Haupt-Bauelementträger 20 befinden, der mit geeigneten Einrichtungen temperaturstabilisiert bzw. temperaturgeregelt wird. Im Beispiel ist zur Temperaturerfassung des Chassis 20 ein am Chassis angebrachter Thermistor 21 vorgesehen, dessen Widerstand ein Maß für die Temperatur des Chassis ist. In einer mit dem Thermistor signalleitend verbundenen ersten Regeleinrichtung 22 wird das Temperatursignal des Thermistors verarbeitet und daraus ein geeigneter Wert für den Treiberstrom eines an den Leistungsausgang der Regeleinrichtung 22 angeschlossenen Peltierelements 23 ermittelt, daß in gutem, großflächigen Wärmeleitungskontakt mit dem Hauptchassis 20 steht. Mit dem temperaturgeregelten Hauptchassis 20 ist eine erste Temperaturstabilisierungseinheit geschaffen, die für alle damit wärmeleitenden verbundenen, insbesondere daran befestigten weiteren Bauelemente der Vorrichtung eine nur geringe Temperaturschwankungen zeigende thermische Umgebung bildet.

Die Laserdiode 1 selbst ist auf einem eigenen, gesonderten, eine erste Stabilisierungseinheit bildenden Lichtquellenträgerchassis 25 befestigt. Dessen Temperatur wird durch eine von der zweiten Regeleinrichtung gesonderte erste Regeleinrichtung 26 geregelt. Hierzu ist am Lichtquellenträgerchassis 25 als Temperatursensor eine wechselspannungsgeregelte Thermistorbrücke 27 befestigt, deren Meßsignal durch eine Lock-In-Schaltung der ersten Regeleinrichtung 26 ausgewertet wird. Am Ausgang des Reglers 26 ist ein zwischen Hauptchassis 20 und Subchassis 25 angeordnetes weiteres Peltierelement 28 angeschlossen, durch das die Temperatur des Laserquellenchassis 25 und damit die Temperatur der Laserquelle 1 gegenüber der nur geringen Schwankungen unterliegenden Temperatur des Hauptchassis 20 feinstabilisiert wird. Experimente haben gezeigt, daß die maximalen Temperaturschwankungen der Laserlichtquelle im Bereich von ca. 1 µK bis ca. 10 µK liegen können.

Mit Vorteil wirkt die zweistufige Temperaturstabilisierung nicht nur auf die Laserlichtquelle, sondern auch auf zumindest einige der in Zusammenhang mit Figur 1 genannten optischen Bauelemente zur Strahlführung und Strahlbeeinflussung. Beispielsweise kann die Temperaturregelung des Interferometerchassis 20 sowohl eine Abführung der Abwärme des auf der Oberseite des Chassis angebrachten akustischen Modulators 6, als auch eine Stabilisierung der Justage der auf dem Chassis angebrachten, in Figur 2 nicht gezeigten optischen Bauelemente bewirken. Außerdem wird durch das Hauptchassis 20 eine temperaturstabile Umgebung für das Subchassis 25 geschaffen. Auf dem Subchassis 25 können insbesondere eine nicht gezeigte Kollimationsoptik und ggf. ein optischer Isolator befestigt sein, die direkten Einfluß auf die Qualität des auf dem Strahlteiler 3 auftreffenden Ausgangslichtes haben.

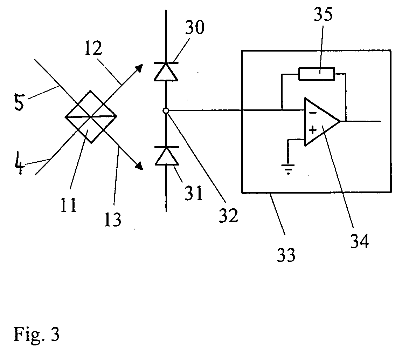

Eine bevorzugte Ausführungsform der Detektionseinrichtung 15 wird nun anhand von Figur 3 beschrieben. Dort ist der dem Detektor zugeordnete Strahlteiler 11 zu erkennen, der den einfallenden Referenzstrahl 5 sowie den einfallenden Objektstrahl 4 so aufteilt, daß an den beiden Ausgängen des Strahlteilers rechtwinklig zueinander zwei Strahlanteile 12, 13 austreten, die jeweils einen Anteil Referenzlicht und einen Anteil Objektlicht überlagert enthalten. Die Detektoreinrichtung 15 hat zur Umwandlung des einfallenden Lichts in elektrisch weiterverarbeitbare Signale zwei in Reihe zueinander geschaltete Fotodioden 30, 31, die in Bezug auf den Strahlteiler 11 so anordenbar sind, daß der in Verlängerung des Objektlichtes liegende Überlagerungsstrahl 12 auf die erste Fotodiode 30 und der in Verlängerung des Referenzstrahls liegende Anteil 13 in einem Abstand davon auf die zweite Fotodiode 31 auftrifft. Die Fotodioden 30, 31 haben jeweils ebene Lichtauftreffflächen, die bezogen auf die Einfallsrichtung der auf sie auftreffenden Strahlen im Brewsterschen Winkel von ca. 50 bis 70 Grad ausgerichtet sind. Dadurch wird ein optimaler Umwandlungsgrad von auftreffender Lichtintensität zur Stärke des erzeugten elektrischen Signals (Fotodiodenstrom) erreicht.

Die räumlich voneinander getrennten Fotodioden sind hinsichtlich ihrer elektrischen Eigenschaften idealerweise identisch ausgebildet. Durch eine nicht gezeigte elektrische Vorspannungseinrichtung sind die Fotodioden mit einer konstanten elektrischen Gleichspannung von beispielsweise 15 Volt für jede Fotodiode in Sperrichtung vorgespannt. Dies bewirkt insbesondere, daß die Grenzfrequenz der Übertragungsfunktion, d. h. diejenige Frequenz, bei der die Signalamplitude auf 50 % ihres vollen Wertes absinkt, zu hohen Frequenzen verschoben wird, was sich positiv auf die Bandbreite des Systems auswirkt. In der Reihenschaltung befindet sich, vorzugsweise symmetrisch zwischen den Fotodioden 30, 31, ein Spannungsabgriff 32, der bezogen auf die Vorspannung auf Nullpotential liegt und an dem ein Differenzsignal abgreifbar ist, das durch Unterschiede in den Fotodiodenströmen der beiden Fotodioden hervorgerufen wird. Der Abgriff 32 ist mit dem Eingang einer Transimpedanzschaltung 33 verbunden, die bei der bevorzugten Ausführungsform einen Operationsverstärker 34 aufweist, dessen "Minus"-Eingang mit dem Abgriff 32 und dessen "Plus"-Eingang mit Masse verbunden ist. Der Abgriff 32 ist weiterhin über einen als Rückkoppelwiderstand wirkenden Lastwiderstand 35 mit dem Ausgang des Operationsverstärkers verbunden.

Diese Schaltung bewirkt, daß die Transimpedanzschaltung 33 für beide Fotodioden 30, 31 genutzt wird, indem die Spannung zwischen den in Reihe geschalteten und unter doppelter Vorspannung stehenden Fotodioden abgegriffen und durch die Schaltung 33 verstärkt wird. Die Nutzung eines Fotodiodenstrom-Differenzsignales als Eingangssignal für die Transimpedanzschaltung führt dazu, daß Gleichtaktströme, also solche Ströme, die bei beiden Fotodioden 30, 31 gleichzeitig und in gleicher Weise (Amplitude, Frequenz) auftreten, praktisch nicht über den Rückkoppelungswiderstand 35 fließen, so daß die volle Dynamik der Transimpedanzschaltung zur Auswertung des Differenzsignals zur Verfügung steht, das die Information über das Meßobjekt trägt. Da durch die erfindungsgemäße Schaltung die Differenzbildung und damit die Eliminierung des Gleichlichtanteils durch Subtraktion der Fotodiodenströme vor Abfall von Diodenströmen an einem Lastwiderstand erfolgt, wird die Auswerteschaltung nicht durch auf hohe Gleichlichtanteile zurückgehende hohe Gleichströme belastet, so daß z. B. Probleme der Sättigung der Detektoreinrichtung, die bei herkömmlichen Detektoren auftreten können, vermieden werden. Es können also problemlos leistungsstarke Referenzlichtfelder genutzt werden, die aus den eingangs erwähnten Gründen vorteilhaft für eine Auflösungsverbesserung bis in den Bereich des Quantenrauschlimits sind.

Es ist dem Fachmann verständlich, daß zur Auswertung und/oder Verstärkung des am Abgriff 32 auftretenden Differenzsignals jede geeignete analoge und/oder digitale Schaltungsanordnung genutzt werden kann. Insbesondere muß bei Verwendung einer Transimpedanzschaltung diese nicht unbedingt invertierend geschaltet sein. Wenn besonders kostengünstige Lösungen gewünscht sind, ist es z. B. auch möglich, auf Operationsverstärker zu verzichten und einen Differenzfotodiodenstrom direkt durch einen Lastwiderstand zu leiten und den Spannungsabfall am Lastwiderstand zur Weiterverarbeitung zu nutzen.

Erfindungsgemäße Einrichtungen sind nicht nur bei den erläuterten Anwendungen im Medizinbereich mit großem Vorteil einsetzbar. Interferometer mit Auflösungen im Bereich des Quantenrauschlimits sind, z. B. auch bei Messungen über größere Entfernungen an rauhen Oberflächen vorteilhaft, z. B. bei interferometrischen Messungen an schwingenden Karosserieteilen von Kraftfahrzeugen. Hier ist die auswertbare Lichtintensität aufgrund des großen Arbeitsbereiches nur sehr gering, da Detektoren in der Regel nur einen sehr kleinen Raumwinkel von zurückreflektierender Lichtintensität erfassen.

## Patentansprüche

1. Vorrichtung zur berührungslosen Vermessung eines Meßobjekts, insbesondere zur Distanz- und/oder Schwingungsmessung, mit
mindestens einer Lichtquelle zur Abgabe von kohärentem Licht;
optischen Einrichtungen zur Teilung des Lichts in zur Wechselwirkung mit dem Meßobjekt vorgesehenes Objektlicht und Referenzlicht und zur Überlagerung von Objektlicht und Referenzlicht nach Wechselwirkung des Objektlichts mit dem Meßobjekt; und
einer Detektionseinrichtung zur Umwandlung des Referenzlichts und des Objektlichts in zur Weiterverarbeitung geeignete elektrische Signale, **dadurch gekennzeichnet, daß** die Detektionseinrichtung (15) mindestens zwei in Reihe geschaltete optoelektronische Wandler (30, 31) aufweist und daß zwischen den Wandlern (30, 31) ein Abgriff (32) zum Abgreifen eines zur Weiterverarbeitung vorgesehenen Signals vorgesehen ist.

2. Vorrichtung nach Anspruch 1, **dadurch gekennzeichnet, daß** es sich bei den optoelektronischen Wandlern um Fotodioden (30, 31) handelt und/oder daß die optoelektronischen Wandler (30, 31) im wesentlichen identisch ausgelegt sind und/oder daß das Signal am Abgriff (32) ein Differenzsignal ist.

3. Vorrichtung nach Anspruch 1 oder 2, **dadurch gekennzeichnet, daß** die Detektionseinrichtung zur Weiterverarbeitung des Signals eine einzige, den mindestens zwei optoelektronischen Wandlern zugeordnete Verstärkungsschaltung aufweist, insbesondere eine Transimpedanzschaltung (34) und/oder daß der Abgriff (32) unmittelbar mit einem Eingang eines Operationsverstärkers (34) verbunden ist.

4. Vorrichtung nach einem der vorhergehenden Ansprüche, **dadurch gekennzeichnet, daß** eine Vorspannungseinrichtung zur Erzeugung einer im wesentlichen konstanten elektrischen Vorspannung an der Reihenschaltung in Sperrichtung der Wandler (30, 31) vorgesehen ist.

5. Vorrichtung nach einem der vorhergehenden Ansprüche, **dadurch gekennzeichnet, daß** mindestens einer der Wandler, vorzugsweise jeder der Wandler, eine Lichtauftrefffläche aufweist, die bezogen auf eine Lichteinfallsrichtung im wesentlichen im Brewsterschen Winkel ausgerichtet ist.

6. Vorrichtung nach einem der vorhergehenden Ansprüche, **dadurch gekennzeichnet, daß** als Lichtquelle eine Laserdiode (1) vorgesehen ist.

7. Vorrichtung nach einem der vorhergehenden Ansprüche, **dadurch gekennzeichnet, daß** zur Stabilisierung der Temperatur der Lichtquelle eine mehrstufige Temperaturstabilisierungseinrichtung vorgesehen ist, die eine mit der Lichtquelle (1) wärmeleitend verbundene, temperaturgeregelte erste Stabilisierungseinheit (25) aufweist, die wärmeleitend mit mindestens einer temperaturgeregelten zweiten Stabilisierungseinheit (20) verbunden ist.

8. Vorrichtung nach Anspruch 7, **dadurch gekennzeichnet, daß** der ersten Stabilisierungseinheit (25) und/oder der zweiten Stabilisierungseinheit (20) zur Veränderung der Temperatur der Stabilisierungseinheit mindestens ein Peltierelement (23, 28) zugeordnet ist.

9. Vorrichtung nach einem der vorhergehenden Ansprüche, **dadurch gekennzeichnet, daß** mindestens eine optische Einrichtung zur Beeinflussung des Lichts der Lichtquelle (1) gemeinsam mit der Lichtquelle an einer temperaturgeregelten Stabilisierungseinheit (25) angebracht ist, wobei es sich bei der optischen Einrichtung insbesondere um ein Kollimationsoptik und/oder einen optischen Isolator handelt.

10. Vorrichtung nach einem der vorhergehenden Ansprüche, **dadurch gekennzeichnet, daß** mindestens eine optische Einrichtung zur Teilung und/oder Überlagerung des Lichts an einer temperaturgeregelten Stabilisierungseinheit angebracht ist und/oder daß mindestens eine Frequenzverschiebungseinrichtung (6) an einer temperaturgeregelten Stabilisierungseinrichtung angebracht ist.

11. Vorrichtung nach einem der vorhergehenden Ansprüche, **dadurch gekennzeichnet, daß** mindestens eine, vorzugsweise genau eine Frequenzverschiebungseinrichtung zur Erzeugung einer Frequenzverschiebung zwischen Objektlicht und Referenzlicht vorgesehen ist, wobei die Frequenzverschiebungseinrichtung vorzugsweise ein akustooptischer Modulator ist, insbesondere eine Bragg-Zelle.

12. Detektionseinrichtung zur Umwandlung von Referenzlicht und Objektlicht einer interferometrischen Vorrichtung zur berührungslosen Vermessung eines Meßobjekts, insbesondere zur Distanz- und/oder Schwingungsmessung, in zur Weiterverarbeitung geeignete elektrische Signale, **dadurch gekennzeichnet, daß** die Detektionseinrichtung mindestens zwei in Reihe zueinander geschaltete optoelektronische Wandler (30, 31) aufweist und daß zwischen den Wandlern ein Abgriff (32) zum Abgreifen eines zur Weiterverarbeitung vorgesehenen Signals vorgesehen ist.

13. Detektionseinrichtung nach Anspruch 12, **gekennzeichnet durch** mindestens eines der Merkmale des kennzeichnenden Teils von mindestens einem der Ansprüche 2 bis 5.

14. Temperaturstabilisierte Lichtquelleneinrichtung mit mindestens einer Lichtquelle (1) zur Abgabe von kohärentem Licht und einer mehrstufigen Temperaturstabilisierungseinrichtung zur Stabilisierung der Temperatur der Lichtquelle, wobei die Temperaturstabilisierungseinrichtung eine mit der Lichtquelle (1) verbundene, temperaturgeregelte erste Stabilisierungseinheit (25) aufweist, die wärmeleitend mit mindestens einer temperaturgeregelten zweiten Stabilisierungseinheit (20) verbunden ist.

15. Lichtquelleneinrichtung nach Anspruch 14, **gekennzeichnet durch** mindestens eines der Merkmale des kennzeichnenden Teils von mindestens einem der Ansprüche 6 oder 8 bis 10.
